# EUROPEAN PATENT SPECIFICATION

(11) **EP 0 859 705 B1**
(45) Date of publication and mention of the grant of the patent: **12.02.2003**
(21) Application number: 96937497.4
(22) Date of filing: 04.11.1996
(51) Int. Cl.: B60J 10/02

(54) **WINDOW WITH GLAZING PROFILE**
FENSTER MIT GLASHALTELEISTE
FENETRE A PROFIL POUR VITRAGE

(30) Priority: 06.11.1995 IT RM950236 U
(43) Date of publication of application: 26.08.1998
(73) Proprietor: SOCIETA' ITALIANA VETRO - SIV - S.p.A., 66050 San Salvo (CH) (IT); Pilkington Automotive Limited, St Helens, Merseyside WA10 3TT (GB)
(72) Inventor: NOBEL, Udo, D-38159 Siersse (DE); FROST, Mark Robert, Chorely, Lancashire PR7 5QG (GB)
(74) Representative: Halliwell, Anthony Charles
(86) International application number: IT9600202
(87) International publication number: WO97017221

(56) References cited:
- EP-A- 0 304 694
- EP-A- 0 345 134
- EP-A- 0 531 201
- EP-A- 0 537 067
- BE-A- 647 370
- DE-A- 4 309 088
- US-A- 2 683 905
- US-A- 2 794 218
- PATENT ABSTRACTS OF JAPAN vol. 7, no. 221 (M-246) [1366] , 30 September 1983 & JP 58 116218 A (NISSAN JIDOSHA), 11 July 1983,

## Description

### Technical Field

The present invention relates to a window with a glazing profile of the type disclosed e.g. in EP-A-0 345 134, to a glazing for the window, and also to a seal elements. The window may be for a vehicle, and further aspects of the invention relate to a method of glazing a window in a vehicle.

Vehicle windows are often glazed by direct bonding, i.e. an adhesive material is used to attach the glazing to the vehicle body. This method allows flush glazing (i.e. the outer surface of the window is flush with the vehicle body) or near-flush glazing, and, as well as improving the product, may reduce assembly costs because it lends itself to automation using robots.

The deployment of robots for this task is greatly facilitated if the glazing self-centres as it is inserted in the aperture. Accurate centring is especially important when the glazing is to be flush glazed without a trim strip covering the gap between the edge of the glazing and the adjacent bodywork, because if the glazing is off-centre, the gap will vary in width around the perimeter of the glazing, which is aesthetically undesirable.

Another consideration is to provide means for retaining the glazing in place while the adhesive material sets. There is obviously little point in obtaining accurate centring of the glazing during its initial insertion in the aperture, if it slips out of position before the adhesive has set.

A further consideration is that the window should appear aesthetically acceptable from the inside of the vehicle as well as the outside. To this end separate trim strips have been used to cover the mounting flange of the vehicle body, but assembly costs could be further reduced > if the glazing profile could also perform this trimming function.

### Background Art

It is known from EP-A-345 134 and EP-A-545 896 to provide a glazing with two adhesion beads which harden in different periods of time. One of these beads may include a sealing lip which extends beyond the periphery of the glazing and seals the gap between the glazing and the adjacent vehicle bodywork. This lip may also act as a centring lip when positioning the glazing in the rebate of a window frame.

A problem with these designs is. that the distance which the lip may extend beyond the periphery of the glazing is limited by the tendency of the freshly extruded lip to sag and lose its shape before the polymer material of which the lip is composed has set.

US-A-5,384,995 seeks to address this problem by providing the lip with a supporting release film in contact with each face of the lip. Once the polymer has set, the films are removed by pulling them off the lip. However, the use of such films adds to the cost and complexity of manufacture of the glazing.

Furthermore, all these centring lips suffer from the disadvantage that they are exposed in service to the effects of weathering, in particular UV radiation present in sunlight. This causes deterioration of the polymer material well before the normal service life of the vehicle has elapsed, leading to formation of a black residue, resulting in a generally unattractive appearance. Unfortunately, those polymer materials which resist weathering better are also harder to process during the initial manufacture of the window.

These centring lips are also vulnerable to damage before and during installation of the glazing, and do not allow the "trimless" glazing techniques preferred by some vehicle manufacturers, in which no trim profile is visible between the glazing and the adjacent bodywork. Moreover, they are not capable of retaining the glazing in position while the adhesive sets, or of covering part of the mounting flange from internal view.

Different embodiments of spacer are also disclosed in Figs 3 and 4 of US-A-5,384,995 which do immobilize the glazing while the adhesive material sets. However, these embodiments do not centre the glazing, and as centring is becoming increasingly required, recourse to one of the known centring lips would be necessary to fulfil the centring requirement, which would then entail the disadvantages associated therewith.

There is therefore a need for a glazing profile, capable of centring a glazing, which is protected from weathering and from accidental damage and is relatively cheap and easy to manufacture. Preferably the profile should allow trimless glazing if desired, and it should also retain the glazing in position while any adhesive material sets.

There is also a need for a glazing profile which can also serve as part of the internal trim of the vehicle. Again, it would be preferable if the profile were able to perform this function in combination with the centring and retaining functions mentioned above.

### Disclosure of the Invention

It has now been found that it is possible to provide a window with such a profile. By designing the profile to act on the inner edge of a mounting flange, instead of on a distance portion of the flange which spaces the parallel portion of the flange from the outside surface of the vehicle body, it has become possible to provide a glazing profile including a functional element which not only centres the glazing, but can, if desired, perform retaining and trimming functions as well or instead, and which does not suffer from the disadvantages of the prior art.

According to the present invention there is provided a window for a vehicle, comprising a glazing including an elastomeric glazing profile disposed around at least part of its periphery on a margin of a face of the glazing, and a mounting flange having an inner edge defining an aperture in a vehicle body, the glazing being inserted in the aperture from outside the vehicle body, and bonded to the mounting flange by an adhesive material such that the glazing is flush with the external vehicle bodywork, characterised in that the profile includes a curled lip whose outer surface is shaped and positioned to:
centre the glazing within the aperture during insertion in the aperture by bearing against the inner edge of the mounting flange; and
retain the glazing in position while the adhesive sets, and cover the edge of the mounting flange after said insertion.

This window has the advantage that the centring element of the profile is not exposed to the weather or to UV radiation. Indeed, in many embodiments of the invention, the whole profile is protected from these harmful agents. The functional element of the profile is also better protected from accidental damage, allows trimless glazing if desired and may be adapted to perform additional functions as described below.

The term "inner" is intended here to mean "towards the centre of the aperture", and "edge" is to be interpreted as including any narrow face in which the mounting flange terminates as well as a meeting-line of such a face with one of the major faces of the mounting flange.

Said curled lip extends away from the glazing such that, after insertion of the glazing in the aperture, it extends beyond the edge of the mounting flange of the vehicle body and over the face of the mounting flange which faces away from the glazing.

The glazing profile of this version of the window may eliminate the need for a separate piece of interior trim, thereby simplifying the assembly of the vehicle and reducing the manufacturing costs of the vehicle, while improving the aesthetics of the passenger compartment.

Preferably the glazing profile further includes a spacer portion on the peripheral side of the raised portion, the spacer portion abutting against the mounting flange during installation thereby acting as a stop for the glazing and maintaining the glazing in fixed spaced relationship to the mounting flange. Such a spacer portion ensures that the window may be accurately glazed flush with the surrounding bodywork.

Preferably the curled lip of the glazing profile is adapted to retain the glazing in a centred position while the adhesive used to bond the glazing sets. The need for separate clips, clamps or other supports is thereby eliminated.

According to another aspect of the invention, there is provided a method of glazing a window in a vehicle, including:
providing a glazing including an elastomeric glazing profile disposed on a margin of a face of the glazing around at least part of its periphery, and a mounting flange having an inner edge defining an aperture in a vehicle body,
applying a bead of adhesive material to the glazing or the mounting flange,
offering the glazing to the aperture from outside the vehicle body, including centring the glazing relative to the aperture as it is inserted, wherein the glazing is glazed flush with the external bodywork.
characterised by centring the glazing by means of a curled lip of the glazing profile shaped and positioned to bear against the inner edge of the mounting flange, the curled lip also retaining the glazing in position while the adhesive sets, and covering the edge of the mounting flange.

According to a further aspect, the invention also provides a method of centring a glazing relative to an aperture in a vehicle body as herein described, regardless of the means employed to attach the glazing to the vehicle body.

The invention will now be illustrated by the following description of preferred non-limiting embodiments with reference to the accompanying drawings (all being cross-sections taken in a plane perpendicular to the periphery of the window) in which like reference numerals denote like elements, and:
Fig 1 shows part of a window according to a first embodiment of the invention;
Fig 2 similarly shows part of a window according to a second embodiment of the invention;
Fig 3 corresponds to Fig 1, and shows the glazing of Fig 1 during insertion into the aperture, and before reaching its final position;
Fig 4 shows part of a window according to a third embodiment of the invention;
Fig 5 corresponds to Fig 4, and shows the glazing during insertion into the aperture;
Fig 6 shows a fourth embodiment of the invention;
Fig 7 corresponds to Fig 6, again showing the glazing during insertion.

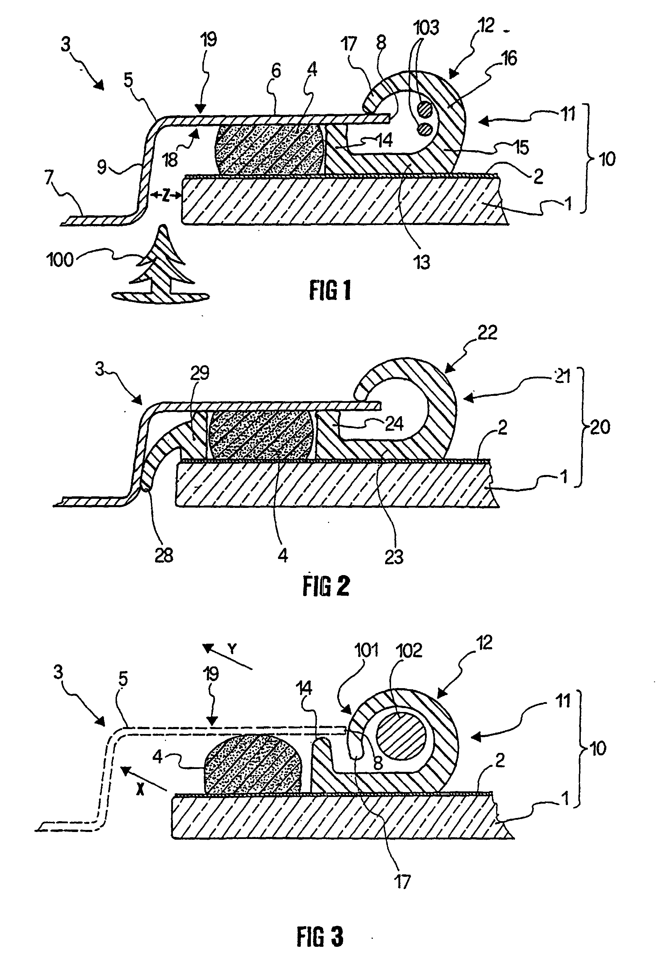

Referring to Fig 1, a first embodiment of part of a window according to the invention is shown in cross-section. The window comprises a glazing 10 and a mounting flange 5, which is part of the bodywork 3 of a vehicle; the glazing 10 itself including a pane of glazing material 1 and a glazing profile or seal element 11. The pane of glazing material may be composed of any material suitable for a vehicle glazing, e.g. glass or plastics material, and if composed of glass it may be toughened or laminated, bent or flat, and of clear, tinted or coated glass.

The glazing profile 11 may likewise be composed of any suitable polymer e.g. polyurethane, pvc, pvc in plastisol form, or thermoplastic elastomers and may be manufactured by extrusion or a moulding process, e. g. injection or flow-moulding, as appropriate. In the embodiments of the invention herein described, the glazing is attached to the vehicle body by means of an adhesive material 4.
The mounting flange 5 comprises a parallel portion 6 which is substantially parallel to both the external bodywork 7 and the pane of glazing material 1 where they meet. The parallel portion of the mounting flange 5 ends at an extreme inner edge 8 which defines an aperture in the vehicle body. Between the parallel portion 6 and the external bodywork 7 is a distance portion 9 which spaces the parallel portion from the external bodywork 7. The mounting flange has two faces 18 and 19; face 18 faces the glazing whereas face 19 faces away from it.

The glazing normally also includes an obscuration band 2, comprising an opaque layer e.g. of ceramic ink, which serves both to obscure the glazing profile, adhesive and mounting flange from external view thereby improving the aesthetic appearance of the vehicle, and to protect those elements from the effect of sunlight, especially the ultra-violet component. It is an advantage of the present invention that, if desired, the whole glazing profile may be obscured from view and protected from weathering (including the effect of UV radiation) by the pane of glazing material and especially by the obscuration band.

The glazing profile comprises at its simplest a bed portion 13 and a raised portion, which in this embodiment is in the form of a curled lip 12. Preferably there is also a spacer portion 14 on the peripheral side of the raised portion, i.e. on the side towards the periphery of the glazing. During insertion of the glazing, the spacer portion 14 will come to abut onto face 18 of the parallel portion 6 of the mounting flange 5, thereby acting as a stop for the glazing and maintaining it in fixed spaced relationship to the mounting flange.

Generally the spacer 14 will be of uniform thickness around the glazing to maintain the glazing 10 at a uniform spacing from the mounting flange 5. However, should the depth of the distance portion 9 of the mounting flange vary around the aperture, the thickness of the spacer portion and raised position can also be raised to compensate. Clearly, if the glazing is to be glazed flush with the external bodywork, the combined thickness of the pane 1 and the spacer portion 14 should be approximately equal to the depth of the distance portion 9.

The adhesive material 4 employed is generally sufficiently viscous to remain substantially in position after application; however, if the need arises (e.g. if an adhesive material of unusually low viscosity is to be used), the spacer portion 14 may be dimensioned and positioned so that it acts as a dam which constrains the spreading of the adhesive material. The same applies to other spacer portions mentioned hereinafter.

As was mentioned above, in this embodiment, the raised portion of the profile 11 is in the form of a curled lip 12 having a base 15 which extends away from the glazing, the remainder of the lip (comprising the body 16 and the tip 17 of the lip) then curling over towards the mounting flange 5 in the form of a scroll. When suitably proportioned, this shape of raised portion is capable of centring the glazing during insertion, retaining the glazing in position while the adhesive sets (both of which will be explained in more detail in connection with Fig 3 below), and covering the edge 8 of the mounting flange, thereby eliminating the need for a separate trim strip on this edge.

Optionally, the space defined by the lip curling over may be utilised for an auxiliary component, for example, one or more electrical wires or leads 103 may be housed within this space. Such leads may be used to provide electric power to electric equipment on or adjacent the window, such as a heating element disposed on the window, or a window wiper. Safety legislation in some countries now requires a further brake lamp to be provided, mounted on the rear window, and the wiring for such brake lamps may conveniently be concealed within the curl of the lip 12. Alternatively the lead(s) 103 may be used to carry the signal from an antenna mounted on or near the window. Although these leads are only shown in Fig 1, they can of course be included in any of the embodiments of the invention.

After installation of the glazing, a small and uniform gap denoted by arrow Z may remain between the pane 1 and the bodywork 3. If trimless glazing is preferred this gap may be left as it is, or alternatively it may be filled by a separate finishing trim strip 100 to avoid dirt and moisture collecting in the gap, albeit with some loss of flushness. The use of a finishing trim strip is especially preferred when the pane 1 is of laminated glass. Alternatively, the second embodiment may be employed, as will now be described.

Fig 2 shows a second embodiment of the invention, which in many respects is the same as the first embodiment, but in which the glazing 20 includes a modified glazing profile 21. The modified profile includes a "drooping" sealing lip 28, i.e. a short lip on the peripheral side of the profile, which initially extends outwards from the glazing 20, but curves round towards a direction perpendicular to the faces of the glazing. This lip 28 does not centre the glazing during insertion, but merely comes to rest against the vehicle bodywork to seal against ingress of dirt and moisture in a similar way to finishing strip 100.

Preferably the profile 21 also includes a second spacer portion 24 to which the sealing lip 28 is attached. The curled lip 22, bed portion 23 and spacer portion 24 are equivalent to the corresponding portions of the first embodiment.

Fig 3 shows the glazing 10 of the first embodiment at an intermediate point during insertion into an aperture in a vehicle body. The glazing has yet to move further in the direction of arrow X to reach its final position. The following description of the installation of the glazing is also equally applicable to the second and third embodiments, as it is not affected by the presence or absence of sealing lip 28 and spacer 29.

A bead of adhesive material 4 having been applied to the glazing 10 on the peripheral side of the profile 11, the glazing is offered to the aperture. Outer surface 101 of the curled lip 12 is shaped and positioned so as to make contact with the inner edge 8 of the mounting flange 5; if the glazing is presented off-centre to the aperture, the surface 101 of the curled lip will first contact the inner edge 8 in just one particular location, rather than along the entire length of the lip simultaneously. The lip will bear against the inner edge in this location, and so the glazing will be correspondingly urged away from this location until the lip contacts the edge around the entire length of the lip. When the curled lip is elastically deformed to an equal extent around its entire length by pressure against the edge, the glazing will be centred. The glazing is inserted until the spacer portion 14 (if employed) abuts against the mounting flange, or the glazing is deemed to have been inserted sufficiently far by other means.

Next, the lip 12 is lifted and pulled over edge 8 so that the tip 17 bears against face 19 of the mounting flange as shown in Fig 1. This may be accomplished manually or with a suitable means of pulling the lip over the edge of the flange. A preferred way is to provide a cord 102 within the curled lip 12 (i.e. within the space defined by the curl of the lip); the cord is hooked out locally at a convenient place and pulled in the direction of arrow Y (Fig 3). As the cord escapes from the curled lip, it progressively pulls the lip into its final position. Alternatively an elastic metal wire may be provided within the curled lip and used in the same way. The degree to which the lip is lifted during this operation increases from its base to its tip. When electrical leads are housed in the curl of the lip, they should be placed further into the curl, away from the tip 17 of the lip, than the pulling means, so that the pulling means does not accidentally pull the electrical leads out of the curl in the course of pulling the lip over the flange.

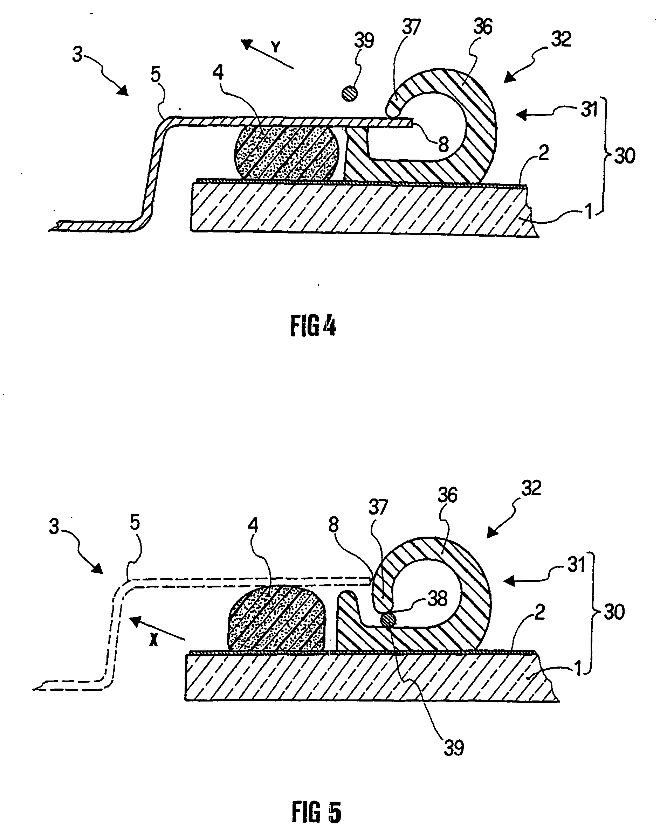

Another preferred way is to provide a pulling means as an integral but detachable part of the glazing profile. Figs 4 and 5 show a third embodiment of the invention which is provided with such a pulling means, Fig 5 again showing the glazing at an intermediate point during insertion. The glazing 30 of Figs 4 and 5 includes a profile 31 which is modified by joining a bead 39 to the tip 37 of the curled lip 32 by means of a narrow neck portion 38. The thickness of the neck portion is selected to be strong enough to transmit a sufficient pulling force to the lip to pull it over the edge 8 of the flange 5, but weak enough for the elastomeric material to tear at the neck portion once the lip has been pulled over the mounting flange, thereby causing the bead 39 to detach from the lip. The bead may be pulled manually or with a suitable tool, and the direction of the pulling force is again shown by arrow Y.

Once the glazing is in its final position, the tip 17 of the curled lip 12 exerts a force on the mounting flange as a result of the elastic properties of the lip which is somewhat stretched from its relaxed configuration when in its final position over the flange. This force retains the glazing in place while the adhesive material 4 sets, and indeed retains the lip itself in place over its service life, during which it may act as part of the internal trim of the vehicle as mentioned elsewhere.

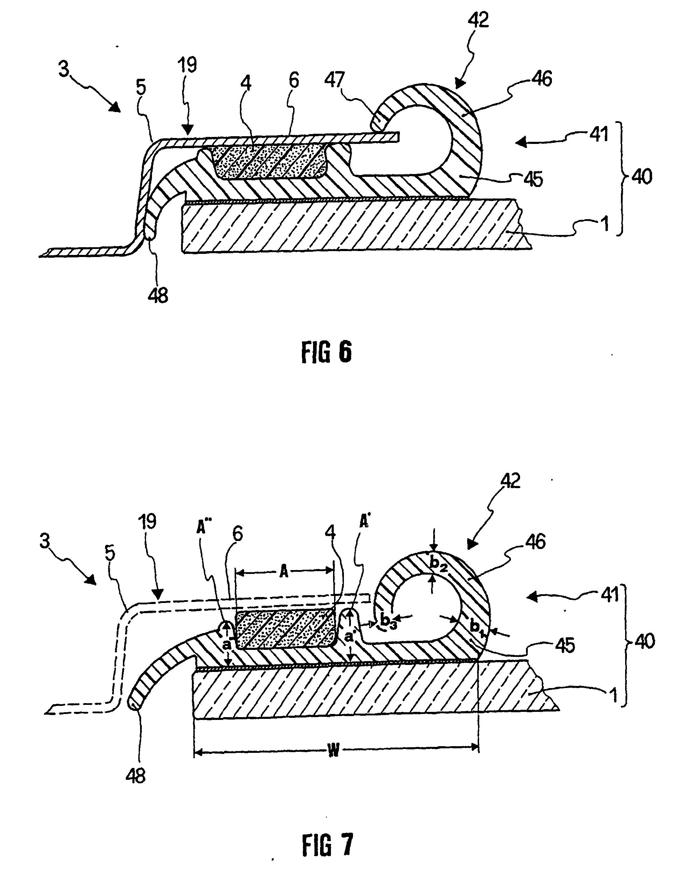

Figs 6 and 7 show a fourth embodiment of the invention in which the curled lip and sealing lip of the second embodiment have been united by extending the bed of the glazing profile so that the profile comprises a single piece of the same elastomeric material. As before, Fig 7 shows the glazing 40 at an intermediate point during its insertion into the aperture. The modified profile 41 is made up as follows: a first tongue or sealing lip 48 which initially protrudes in a direction essentially parallel to the surface of the pane of glazing material; a raised portion in the form of a second tongue or lip 42 which, starting from the opposite edge of the profile to the sealing lip, initially protrudes at its base (or root) 45 in a direction essentially perpendicular to the pane 1, the lip again taking on the shape of a curl elastically curving over itself, thereby forming a curled lip 42.

The glazing profile 41 also includes a slot or channel A, into which the adhesive material 4 is applied to allow adhesion to the bodywork 3; said channel is bordered by two beads A' and A", with a height of a' and a", respectively, in which the ratio between a' and a" is always greater than one. Both beads act as spacer portions, but it is the height a" of bead A" which is finally determinative of the spacing of the glazing from the parallel portion 6 of the mounting flange 5.

The difference in height between A' and A" is equalised when the profile 41 is glued to the bodywork, thanks to the pressure exerted on the higher element A' by the flange 5 of the bodywork 3. In an alternative version of this embodiment, when containment of the adhesive material 4 is less critical, the bead A' may be omitted.

The trim function is achieved when the bodywork 3 and the glazing profile make contact with each other in the area of the channel A by means of the two beads A' and A", that is to say when the glass is glued onto the bodywork 3, by means of the adhesive 4, as shown in Fig 6.

The curled lip 42 is then lifted and progressively pulled over the flange due to the effect of traction by elastic metal elements housed inside the curl, until the lip rests on the face 19 of the flange, exerting on said face a pressure sufficient to retain the glazing in position and seal against the flange. For preference, the elastic metal elements are elastic metal wires as shown in Fig 3.

With the aim of allowing the necessary elasticity of the lip 42, which must be sufficiently elastic for the tip 47 to rest on the bodywork flange 5 and to exert the desired pressure thereon, but must not exert an elastic return force high enough to roll up upon itself, thus compromising its performance, it has been found that the thickness of the lip 42 must decrease gradually from base to tip so that the section shows three different thicknesses, which are defined as follows:
b1 = thickness at the base or root 45 of the lip,
b2 = thickness in the body 46 of the lip, halfway between the base and the tip,
b3 = thickness at the tip 47 of the lip.

The relationship between the different thicknesses is that:
b1 > b2 > b3, where the ratio between b2 and b3 is always greater than 1.2 and the ratio between b1 and b2 is preferably greater than 1.5.

The overall dimensions of the glazing profile, including the width W which is bonded to the pane of glazing material, are dependent upon various parameters such as the size of the glazing, the strength of the bonds to the pane and to the mounting flange etc.

## Claims

1. A window for a vehicle, comprising a glazing (10,20,30,40) including an elastomeric glazing profile (11,21,31,41) disposed around at least part of its periphery on a margin of a face of the glazing, and a mounting flange (5) having an inner edge (8) defining an aperture in a vehicle body, the glazing being inserted in the aperture from outside the vehicle body and bonded to the mounting flange by an adhesive material (4), such that the glazing is flush with the external vehicle bodywork, **characterised in that** the profile includes a curled lip (12, 22, 32, 42) whose outer surface (101) is shaped and positioned to:
centre the glazing within the aperture during insertion in the aperture by bearing against the inner edge of the mounting flange; and
retain the glazing in position while the adhesive sets, and cover the edge of the mounting flange after said insertion.

2. A window as claimed in claim 1, wherein the curled lip (12,22,32,42) extends away from the glazing such that, after insertion of the glazing in the aperture, it extends beyond the edge of the mounting flange of the vehicle body and over the face (19) of the mounting flange which faces away from the glazing.

3. A window as claimed in claim 1 or claim 2, wherein the profile further includes a spacer portion (14, 24A", 54) on the peripheral side of the curled lip, the spacer portion abutting against the mounting flange during installation thereby acting as a stop for the glazing and maintaining the glazing in fixed spaced relationship to the mounting flange.

4. A window as claimed in any preceding claim, wherein the glazing profile includes a further lip (28) on its peripheral side, the base of the further lip extending outwards from the glazing, and the body of the lip extending in a curve towards a direction perpendicular to the faces of the glazing so that the further lip seals against the mounting flange after installation.

5. A window as claimed in any preceding claim, wherein the curled lip (12, 22, 32, 42) has a base (15, 45) which extends away from the glazing, the remainder of the lip curling over towards the mounting flange.

6. A window as claimed in claim 5, including means (102, 39) of pulling the lip over the mounting flange after insertion of the glazing in the aperture.

7. A window as claimed in claim 6, wherein the means comprises a metal wire (102) provided in a space defined by the lip curling over.

8. A window as claimed in claim 6, wherein the means comprises a cord (102) provided in a space defined by the lip curling over.

9. A window as claimed in claim 6, wherein the tip of the lip includes a narrow neck portion (38) which joins a bead (39) to the body of the lip, the neck portion being strong enough to allow the lip to be pulled over the mounting flange, but weak enough to allow the bead to detach from the body of the lip as soon as the lip has been pulled over the mounting flange.

10. A window as claimed in claim 5, wherein at least one electrical wire is provided in a space defined by the lip curling over.

11. A window as claimed in any preceding claim, wherein the glazing profile comprises a single piece of elastomeric material.

12. A vehicle glazing as comprised in a window as claimed in any preceding claim, the glazing comprising a pane of glazing material and an elastomeric glazing profile.

13. A vehicle glazing (10, 20, 30, 40) comprising a pane of glazing material (1) and an elastomeric glazing profile (11, 21, 31, 41) disposed on a margin of a face of the pane around at least part of the periphery of the pane, the glazing being intended for insertion into an aperture in a vehicle body from the outside thereof, the aperture being defined by the inner edge (8) of a mounting flange (5) of the vehicle bodywork, wherein the glazing is glazed flush with the external vehicle bodywork and bonded to the mounting flange by an adhesive (4), **characterised in that**
the profile includes a curled lip shaped and positioned to centre the glazing within the aperture during insertion of the glazing therein, the centring of the glazing being achieved by the curled lip having its outer surface (101) bearing against the inner edge (8) of the mounting flange (5), and that the curled lip is further shaped and positioned to retain the glazing in a centred position while the adhesive sets, and to cover the edge of the mounting flang after the insertion.

14. A seal element for a window according to any of claims 1 to 11, said seal element being applied along the whole internal perimeter of a sheet of glass destined to be glued onto the bodywork of a vehicle by means of adhesive (4) such that the glass is flush with the external bodywork, having at least a first elastic seal tongue (48) to lie against said bodywork, which protrudes from the edge of the glass in a direction that is essentially parallel to the glass, **characterised in that** it comprises a second tongue (42) on the opposite edge to said first seal tongue (48), said second tongue protruding at the root in a direction that is essentially perpendicular to the glass, and taking on in its end portion the shape of a curl elastically curling over backwards upon itself towards the edge of the glass.

15. A seal element according to claim 14, **characterised in that** said tongue (42) has different thicknesses (bl, b2, b3) which decrease from the root towards the intermediate portion and from the latter towards the end portion.

16. A seal element according to claim 15, **characterised in that** the ratio between the thickness (b2) of said intermediate portion and the thickness (b3) of said end portion is greater than 1.2 and the ratio between the thickness (b1) at the root and the thickness (b2) of the intermediate portion is greater than 1.5.

17. A seal element according to any one of claims 14 to 16, further comprising a slot (A) for application of said adhesive (4), **characterised in that** two beads (A') and (A"), differently spaced with respect to said first seal tongue, border said slot and have a height (a') and (a"), respectively, such as to contain the adhesive during gluing.

18. A seal element according to claim 17, in which the height of said beads (A', A") is such that the ratio between the height (a') of the bead (A') furthest from said first seal tongue (48) and the height (a") of the bead (A") closest to said first seal tongue (48) is greater than 1.

19. A method of glazing a vehicle window as claimed in any of claims 1 to 11, including:
providing a glazing including an elastomeric glazing profile disposed on a margin of a face of the glazing around at least part of its periphery, and a mounting flange having an inner edge defining an aperture in a vehicle body;
applying a bead of adhesive material to the glazing or the mounting flange;
offering the glazing to the aperture from outside the vehicle body, including centring the glazing relative to the aperture as it is inserted, wherein the glazing is glazed flush with the external bodywork,
**characterised by** centring the glazing by means of a curled lip of the glazing profile shaped and positioned to bear against the inner edge of the mounting flange, the curled lip also retaining the glazing in position while the adhesive sets, and covering the edge of the mounting flange.

20. A method as claimed in claim 19, wherein the raised portion includes a lip, the method additionally including pulling the lip over the mounting flange.

## Patentansprüche

1. Fenster für ein Fahrzeug, mit einer Verglasung (10, 20, 30, 40), die ein elastomeres Verglasungsprofil (11, 21, 31, 41), das wenigstens um einen Teil ihres Umfangs auf einem Rand einer Fläche der Verglasung angeordnet ist, sowie einen Anbringungsflansch (5), der eine eine Öffnung in einer Fahrzeugkarosserie definierende Innenkante (8) besitzt, umfaßt, wobei die Verglasung in die Öffnung von außerhalb der Fahrzeugkarosserie eingesetzt und mit dem Anbringungsflansch durch ein Klebstoffmaterial (4) verklebt ist, so daß die Verglasung mit dem äußeren Fahrzeugaufbau bündig ist, **dadurch gekennzeichnet, daß** das Profil eine gerollte Lippe (12, 22, 32, 42) enthält, deren äußere Oberfläche (101) so geformt und positioniert ist, daß:
die Verglasung während des Einsetzens in die Öffnung durch Abstützen gegen die Innenkante des Anbringungsflansches in der Öffnung zentriert wird; und
die Verglasung an ihrer Position gehalten wird, während der Klebstoff härtet, und die Kante des Anbringungsflansches nach dem Einsetzen von der äußeren Oberfläche (101) abgedeckt ist.

2. Fenster nach Anspruch 1, bei dem sich die gerollte Lippe (12, 22, 32, 42) von der Verglasung weg erstreckt, so daß sie sich nach dem Einsetzen der Verglasung in die Öffnung über die Kante des Anbringungsflansches der Fahrzeugkarosserie hinaus und über die Fläche (19) des Anbringungsflansches, die von der Verglasung weggerichtet ist, erstreckt.

3. Fenster nach Anspruch 1 oder Anspruch 2, bei dem das Profil ferner auf der Umfangsseite der gerollten Lippe einen Abstandshalterabschnitt (14, 24A", 54) enthält, der während der Installation an dem Anbringungsflansch anliegt, um als Anschlag für die Verglasung zu wirken und um die Verglasung in einer festen räumlichen Beziehung zu dem Anbringungsflansch zu halten.

4. Fenster nach einem vorhergehenden Anspruch, bei dem das Verglasungsprofil auf seiner Umfangsseite eine weitere Lippe (28) enthält, deren Basis sich von der Verglasung nach außen erstreckt, und der Körper der Lippe sich längs einer Kurve in eine Richtung senkrecht zu den Flächen der Verglasung erstreckt, so daß die weitere Lippe nach der Installation gegen den Anbringungsflansch abdichtet.

5. Fenster nach einem vorhergehenden Anspruch, bei dem die gerollte Lippe (12, 22, 32, 42) eine Basis (15, 45) besitzt, die sich von der Verglasung weg erstreckt, wobei der Rest der Lippe über den Anbringungsflansch gerollt ist.

6. Fenster nach Anspruch 5, das Mittel (102, 39) zum Ziehen der Lippe über den Anbringungsflansch nach dem Einsetzen der Verglasung in die Öffnung enthält.

7. Fenster nach Anspruch 6, bei dem die Mittel einen Metalldraht (102) umfassen, der in einem Raum vorgesehen ist, der durch die aufgerollte Lippe definiert ist.

8. Fenster nach Anspruch 6, bei dem die Mittel einen Cord (102) umfassen, der in einem Raum vorgesehen ist, der durch die aufgerollte Lippe definiert ist.

9. Fenster nach Anspruch 6, bei dem die Spitze der Lippe einen schmalen Halsabschnitt (38) enthält, der einen Wulst (39) mit dem Körper der Lippe verbindet, wobei der Halsabschnitt stark genug ist, um ein Ziehen der Lippe über den Anbringungsflansch zu ermöglichen, jedoch schwach genug ist, um eine Lösung des Wulstes vom Körper der Lippe zuzulassen, sobald die Lippe über den Anbringungsflansch gezogen worden ist.

10. Fenster nach Anspruch 5, bei dem wenigstens ein elektrischer Draht in einem durch die umgebogene Lippe definierten Raum vorgesehen ist.

11. Fenster nach einem vorhergehenden Anspruch, bei dem das Verglasungsprofil ein einziges Teil aus einem elastomeren Werkstoff umfaßt.

12. Fahrzeugverglasung, die in einem Fenster nach einem vorhergehenden Anspruch enthalten ist, wobei die Verglasung eine Platte aus Verglasungsmaterial und ein elastomeres Verglasungsprofil umfaßt.

13. Fahrzeugverglasung (10, 20, 30, 40), die eine Platte aus Verglasungsmaterial (1) und ein elastomeres Verglasungsprofil (11, 21, 31, 41), das auf einem Rand einer Fläche der Platte wenigstens um einen Teil des Umfangs der Platte angeordnet ist, umfaßt, wobei die Verglasung in eine Öffnung in einer Fahrzeugkarosserie von ihrer Außenseite eingesetzt werden soll, wobei die Öffnung durch die Innenkante (8) eines Anbringungsflansches (5) des Fahrzeugaufbaus definiert ist, wobei die Verglasung mit dem äußeren Fahrzeugaufbau glatt bündig ist und mit dem Anbringungsflansch durch einen Klebstoff (4) verklebt ist, **dadurch gekennzeichnet, daß**
das Profil eine gerollte Lippe enthält, die so geformt und positioniert ist, daß die Verglasung während des Einsetzens der Verglasung in die Öffnung in der Öffnung zentriert wird, wobei die Zentrierung der Verglasung durch die gerollte Lippe erzielt wird, deren äußere Oberfläche (101) sich gegen die Innenkante (8) des Anbringungsflansches (5) abstützt, und daß die gerollte Lippe ferner so geformt und positioniert ist, daß die Verglasung in einer zentrierten Position gehalten wird, während der Klebstoff härtet, und daß sie die Kante des Anbringungsflansches nach dem Einsetzen abdeckt.

14. Dichtungselement für ein Fenster nach einem der Ansprüche 1 bis 11, wobei das Dichtungselement längs des gesamten inneren Umfangs einer Glasplatte aufgebracht wird und dazu bestimmt ist, auf den Aufbau eines Fahrzeugs mittels eines Klebstoffs (4) geklebt zu werden, so daß das Glas mit dem äußeren Aufbau bündig ist, wobei das Dichtungselement wenigstens eine erste elastische Dichtungszunge (48) besitzt, die am Aufbau anliegen soll und von der Kante des Glases in einer Richtung vorsteht, die zu dem Glas im wesentlichen parallel ist, **dadurch gekennzeichnet, daß** es eine zweite Zunge (42) auf der der ersten Dichtungszunge (48) gegenüberliegenden Kante umfaßt, die an der Wurzel in einer Richtung vorsteht, die zu dem Glas im wesentlichen senkrecht ist und in ihrem Endabschnitt die Form einer Windung annimmt, die in Richtung zur Kante des Glases elastisch auf sich selbst zurückgerollt ist.

15. Dichtungselement nach Anspruch 14, **dadurch gekennzeichnet, daß** die Zunge (42) unterschiedliche Dicken (b1, b2, b3) besitzt, die von der Wurzel zum Zwischenabschnitt und von dem letzteren zum Endabschnitt abnehmen.

16. Dichtungselement nach Anspruch 15, **dadurch gekennzeichnet, daß** das Verhältnis zwischen der Dicke (b2) des Zwischenabschnitts und der Dicke (b3) des Endabschnitts größer als 1,2 ist und daß das Verhältnis zwischen der Dicke (b1) bei der Wurzel und der Dicke (b2) des Zwischenabschnitts größer als 1,5 ist.

17. Dichtungselement nach einem der Ansprüche 14 bis 16, das ferner einen Schlitz (A) für die Aufbringung des Klebstoffs (4) umfaßt, **dadurch gekennzeichnet, daß** zwei Wulste (A') und (A"), die von der ersten Dichtungszunge unterschiedlich weit beabstandet sind, an den Schlitz angrenzen und eine Höhe (a') bzw. (a") besitzen, derart, daß sie den Klebstoff während des Klebens enthalten.

18. Dichtungselement nach Anspruch 17, bei dem die Höhe der Wulste (A', A") derart ist, daß das Verhältnis zwischen der Höhe (a') des Wulstes (A'), der sich am weitesten von der ersten Dichtungszunge (48) entfernt befindet, und der Höhe (a") des Wulstes (A"), der sich am nähesten bei der ersten Dichtungszunge (48) befindet, größer als 1 ist.

19. Verfahren zum Verglasen eines Fahrzeugfensters nach einem der Ansprüche 1 bis 11, das umfaßt:
Bereitstellen einer Verglasung, die ein elastomeres Verglasungsprofil enthält, das auf einem Rand einer Fläche der Verglasung wenigstens um ein Teil ihres Umfangs angeordnet ist, und einen Anbringungsflansch enthält, der eine Innenkante besitzt, die eine Öffnung in einer Fahrzeugkarosserie definiert;
Anbringen eines Wulstes aus Klebstoff an der Verglasung oder am Anbringungsflansch;
Annähern der Verglasung an die Öffnung von außerhalb der Fahrzeugkarosserie einschließlich Zentrieren der Verglasung in bezug auf die Öffnung, wenn sie eingesetzt wird, wobei die Verglasung mit dem äußeren Aufbau glatt bündig ist,
**gekennzeichnet durch** Zentrieren der Verglasung mittels einer gerollten Lippe des Verglasungsprofils, die so geformt und positioniert ist, daß sie sich gegen die Innenkante des Anbringungsflansches abstützt, wobei die gerollte Lippe außerdem die Verglasung an ihrer Position hält, während der Klebstoff härtet, und die Kante des Anbringungsflansches abdeckt.

20. Verfahren nach Anspruch 19, bei dem der erhöhte Abschnitt eine Lippe enthält, wobei das Verfahren zusätzlich das Ziehen der Lippe über den Anbringungsflansch umfaßt.

## Revendications

1. Fenêtre pour véhicule, comprenant un vitrage (10, 20, 30, 40) comprenant un profil élastomère pour vitrage (11, 21, 31, 41) disposé autour d'au moins une partie de sa périphérie sur une marge d'une face du vitrage, et un rebord de montage (5) comportant un bord interne (8) définissant une ouverture dans la carrosserie d'un véhicule, le vitrage étant inséré dans l'ouverture depuis l'extérieur de la carrosserie du véhicule et lié au rebord de montage par un matériau adhésif (4), de manière que le vitrage soit de niveau avec la carrosserie extérieure du véhicule, **caractérisée en ce que** le profil comprend une bordure enroulée (12, 22, 32, 42) dont la surface externe (101) est façonnée et positionnée de manière à :
centrer le vitrage au sein de l'ouverture durant l'insertion dans l'ouverture en portant contre le bord interne du rebord de montage ; et
maintenir le vitrage en position tandis que l'adhésif durcit, et recouvrir le bord du rebord de montage après ladite insertion.

2. Fenêtre selon la revendication 1, dans laquelle la bordure enroulée (12, 22, 32, 42) s'étend loin du vitrage de manière que, après insertion du vitrage dans l'ouverture, elle s'étende au-delà du bord du rebord de montage de la carrosserie du véhicule et sur la face (19) du rebord de montage qui donne loin du vitrage.

3. Fenêtre selon la revendication 1 ou la revendication 2, dans laquelle le profil comprend également une partie d'écartement (14, 24, A") sur le côté périphérique de la bordure enroulée, la partie d'écartement butant contre le rebord de montage durant l'installation de manière à servir de butée pour le vitrage et maintenir celui-ci dans une relation d'espacement fixe par rapport au rebord de montage.

4. Fenêtre selon l'une quelconque des revendications précédentes, dans laquelle le profil pour vitrage comprend une bordure supplémentaire (28) sur son côté périphérique, la base de la bordure supplémentaire s'étendant vers l'extérieur depuis le vitrage, et le corps de la bordure s'étendant en une courbe vers une direction perpendiculaire aux faces du vitrage de manière que la bordure supplémentaire crée une étanchéité contre le rebord de montage après installation.

5. Fenêtre selon l'une quelconque des revendications précédentes, dans laquelle la bordure enroulée (12, 22, 32, 42) comporte une base (15, 45) qui s'étend loin du vitrage, le restant de la bordure s'enroulant vers le rebord de montage.

6. Fenêtre selon la revendication 5, comprenant un moyen (102, 39) pour tirer la bordure sur le rebord de montage après insertion du vitrage dans l'ouverture.

7. Fenêtre selon la revendication 6, dans laquelle le moyen comprend un fil de métal (102) situé dans un espace défini par la bordure enroulée.

8. Fenêtre selon la revendication 6, dans laquelle le moyen comprend un câble (102) situé dans un espace défini par la bordure enroulée.

9. Fenêtre selon la revendication 6, dans laquelle l'extrémité de la bordure comprend une partie d'étranglement étroit (38) qui relie un bourrelet (39) au corps de la bordure, la partie d'étranglement étant suffisamment solide pour permettre à la bordure d'être tirée sur le rebord de montage, mais suffisamment fragile pour permettre au bourrelet de se séparer du corps de la bordure dès que la bordure a été tirée sur le rebord de montage.

10. Fenêtre selon la revendication 5, dans laquelle au moins un fil électrique est situé dans un espace défini par la bordure enroulée.

11. Fenêtre selon l'une quelconque des revendications précédentes, dans laquelle le profil pour vitrage comprend une seule pièce de matériau élastomère.

12. Vitrage pour véhicule inclus dans une fenêtre selon l'une quelconque des revendications précédentes, le vitrage comprenant une vitre de matériau de vitrage et un profil élastomère pour vitrage.

13. Vitrage pour véhicule (10, 20, 30, 40) comprenant une vitre de matériau de vitrage (1) et un profil élastomère pour vitrage (11, 21, 31, 41) disposé sur une marge d'une face de la vitre autour d'au moins une partie de la périphérie de la vitre, le vitrage étant destiné à être inséré dans une ouverture dans la carrosserie d'un véhicule depuis l'extérieur, l'ouverture étant définie par le bord interne (8) d'un rebord de montage (5) de la carrosserie du véhicule, dans lequel le vitrage est posé de niveau avec la carrosserie externe du véhicule et lié au rebord de montage par un adhésif (4), **caractérisé en ce que**
le profil comprend une bordure enroulée façonnée et positionnée de manière à centrer le vitrage dans l'ouverture durant l'insertion du vitrage dans l'ouverture, le centrage du vitrage étant réalisé par la bordure enroulée ayant sa surface externe (101) portant contre le bord interne (8) du rebord de montage (5), et **en ce que** la bordure enroulée est en outre façonnée et positionnée de manière à maintenir le vitrage en une position centrée tandis que l'adhésif durcit, et recouvrir le bord du rebord de montage après l'insertion.

14. Elément d'étanchéité pour une fenêtre selon l'une quelconque des revendications 1 à 11, ledit élément d'étanchéité étant appliqué sur la totalité du périmètre interne d'une feuille de verre destinée à être collée sur la carrosserie d'un véhicule au moyen d'un adhésif (4) de manière que le verre soit de niveau avec la carrosserie externe, comportant au moins une première languette d'étanchéité élastique (48) pour porter contre ladite carrosserie, qui fait saillie depuis le bord du verre dans une direction qui est sensiblement parallèle au verre, **caractérisé en ce qu'**il comprend une deuxième languette (42) sur le bord opposé à ladite première languette d'étanchéité (48), ladite deuxième languette faisant saillie à la racine dans une direction qui est sensiblement perpendiculaire au verre, et prenant à sa partie d'extrémité la forme d'un rouleau s'enroulant élastiquement sur lui-même vers l'arrière, vers le bord du verre.

15. Elément d'étanchéité selon la revendication 14, **caractérisé en ce que** ladite languette (42) présente des épaisseurs différentes (b1, b2, b3) qui vont en diminuant de la racine vers la partie intermédiaire et de la partie intermédiaire vers la partie d'extrémité.

16. Elément d'étanchéité selon la revendication 15, **caractérisé en ce que** le rapport entre l'épaisseur (b2) de ladite partie intermédiaire et l'épaisseur (b3) de ladite partie d'extrémité est supérieur à 1,2 et le rapport entre l'épaisseur (b1) à la racine et l'épaisseur (b2) de la partie intermédiaire est supérieur à 1,5.

17. Elément d'étanchéité selon l'une quelconque des revendications 14 à 16, comprenant en outre une fente (A) pour application dudit adhésif (4), **caractérisé en ce que** deux bourrelets (A') et (A"), à distance différente de ladite première languette d'étanchéité, flanquent ladite fente et ont une hauteur (a') et (a"), respectivement, de manière à confiner l'adhésif durant le collage.

18. Elément d'étanchéité selon la revendication 17, dans lequel la hauteur desdits bourrelets (A', A") est telle que le rapport entre la hauteur (a') du bourrelet (A') plus distant de ladite première languette d'étanchéité (48) et la hauteur (a") du bourrelet (A") plus proche de ladite première languette d'étanchéité (48) est supérieur à 1.

19. Procédé pour poser un vitrage sur une fenêtre de véhicule selon l'une quelconque des revendications 1 à 11, comprenant les phases consistant à :
prévoir un vitrage comprenant un profil élastomère pour vitrage disposé sur une marge d'une face du vitrage autour d'au moins une partie de sa périphérie, et un rebord de montage comportant un bord interne définissant une ouverture dans une carrosserie de véhicule ;
appliquer un bourrelet de matériau adhésif sur le vitrage ou le rebord de montage ;
offrir le vitrage à l'ouverture depuis l'extérieur de la carrosserie du véhicule, en centrant le vitrage relativement à l'ouverture pendant son insertion, le vitrage étant posé de niveau avec la carrosserie externe,
**caractérisé en ce que** le vitrage est centré au moyen d'une bordure enroulée du profil pour vitrage, façonnée et positionnée de manière à porter contre le bord interne du rebord de montage, la bordure enroulée maintenant en outre le vitrage en position tandis que l'adhésif durcit, et **en ce que** le bord du rebord de montage est recouvert.

20. Procédé selon la revendication 19, dans lequel la partie exhaussée comprend une bordure, le procédé comprenant la phase supplémentaire consistant à tirer la bordure sur le rebord de montage.
